# EUROPEAN PATENT SPECIFICATION

(11) **EP 2 426 025 B1**
(45) Date of publication and mention of the grant of the patent: **07.01.2015**
(21) Application number: 11171914.2
(22) Date of filing: 29.06.2011
(51) Int. Cl.: B61F 3/02, B61F 5/52, B23K 31/00

(54) **Manufacturing method of bogie chassis for rail car and structure having through hollow**
Verfahren zur Herstellung eines Drehgestellrahmens für einen Eisenbahnwagen und Struktur mit einem Durchgangshohlraum
Procédé de fabrication de châssis de train roulant pour véhicule ferroviaire et structure disposant d'un passage creux

(30) Priority: 06.09.2010 JP 2010198556; 03.03.2011 JP 2011046893
(43) Date of publication of application: 07.03.2012
(73) Proprietor: Hitachi Ltd., Tokyo 100-8280 (JP)
(72) Inventor: Ikeda, Ukyo, Chiyoda-ku, Tokyo 100-8220 (JP); Ishida, Ryoji, Chiyoda-ku, Tokyo 100-8220 (JP); Sato, Akihiro, Chiyoda-ku, Tokyo 100-8220 (JP)
(74) Representative: Gill, Stephen Charles

(56) References cited:
- EP-A1- 0 685 377
- JP-A- 2008 055 952
- JP-A- 2008 093 683
- US-A- 4 465 220

## Description

### BACKGROUND OF THE INVENTION

### 1. Field of the Invention

The present invention relates to a manufacturing method of a bogie chassis for a rail car, and more particularly, to a welding technique for joining respective members to a hollow member such as a middle frame pipe.

### 2. Description of the Related Art

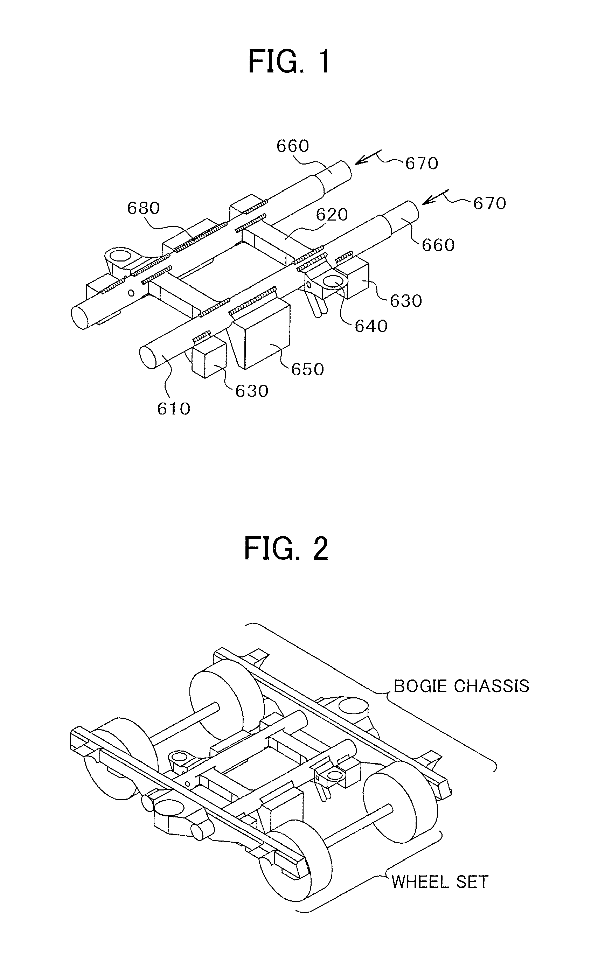

A bogie truck for a rail car is located on a lower portion of the car, and serves as equipment for applying thrust or braking force to the rail car by turning or stopping wheels. FIG. 2 shows a typical bogie truck structure for a rail car. The bogie truck is composed of a bogie chassis, wheel sets each having a combination of wheels and an axle, and various modules such as motors for rotating the wheel sets and brake calipers for reducing the rotational speed of the wheels.

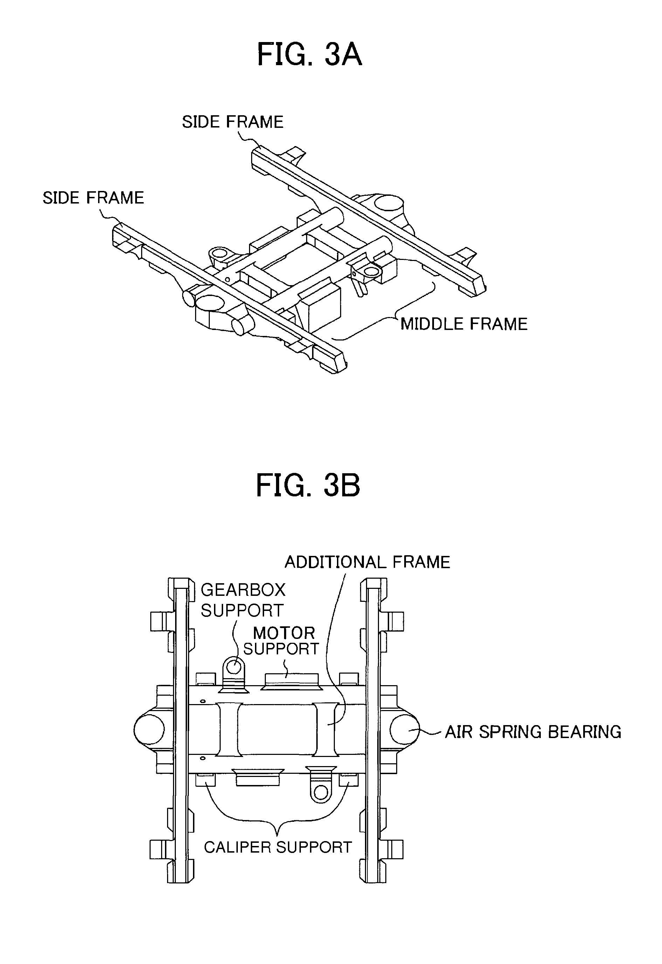

FIGS. 3A and 3B show a typical bogie chassis structure. FIG. 3A is a perspective view of the bogie chassis, and FIG. 3B is a plan view of the bogie chassis. The bogie chassis is composed of a pair of side frames located on the right and left, seen in the traveling direction, a pair of middle frames coupled between the side frames, and mounting portions for mounting various modules. The mounting portions are designed to receive and support the modules, and are therefore called a motor support a caliper support and the like. In the light of its strength and lightweight properties, an iron or aluminum structure having a through hollow is used for the bogie chassis. Also, an additional frame for improvement in strength may be provided between the middle frames.

In the manufacture of a bogie chassis, firstly, components are molded of an iron sheet by cutting and pressing, and then joined by welding or the like to prepare bogie chassis structural members such as the side frames, the middle frames, and the various supports. Next, these structural members are joined, thereby manufacturing the bogie chassis. MAG (Metal Active Gas) welding, MIG (Metal Inertia Gas) welding or the like is employed for joining of the members in the manufacture of the bogie chassis.

Welding distortion becomes a problem in welding. As a welding method with small distortion, there has been proposed a method in which a laser or an electron beam, rather than an arc such as MAG or MIG, is used for the welding heat source. Japanese Published Unexamined Patent Application Nos. 2008-55952 and 2008-149913 disclose this technique. Also, Japanese Published Unexamined Patent Application No. 2008-93683 discloses a structure in which, when a plate is spot-welded to a hollow tubular body, the hollow tubular body is filled with powdery fluid at high pressure so as to prevent the hollow tubular body from being deformed due to mechanical pressure generated at the time of the spot welding.

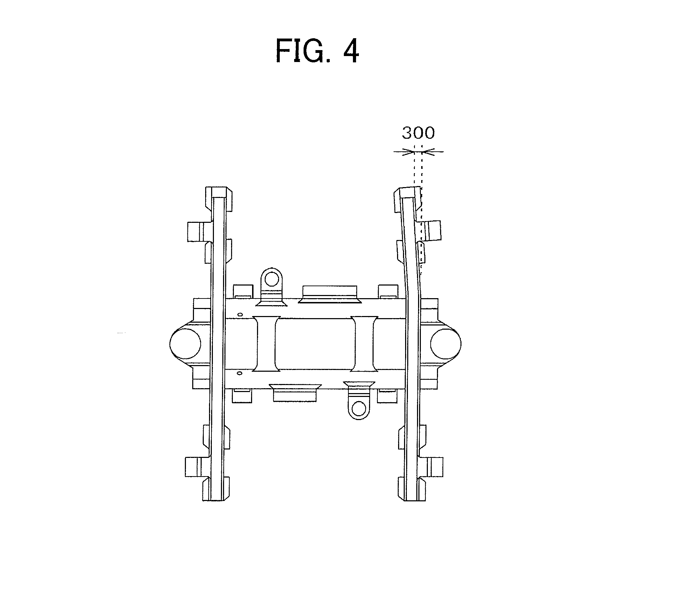

In the joining by welding of the members in the manufacture of the bogie chassis, generation of welding distortion cannot be avoided. The welding distortion refers to a deviation from an original shape in various places of a product that occurs as a result of deformation such as bending around a weld zone caused by a local change of temperature due to welding. FIG. 4 shows a schematic diagram of welding distortion. A side frame that is originally straight is bent at a coupling portion between the side frame and the middle frame, and a deviation 300 from an original position increases at a leading end of the side frame. This deviation is the welding distortion. Some welding distortions create difficulty in subsequent assembly or construction work such as marking. In this case, it becomes necessary to make a correction to the shape. This process is referred to as distortion elimination.

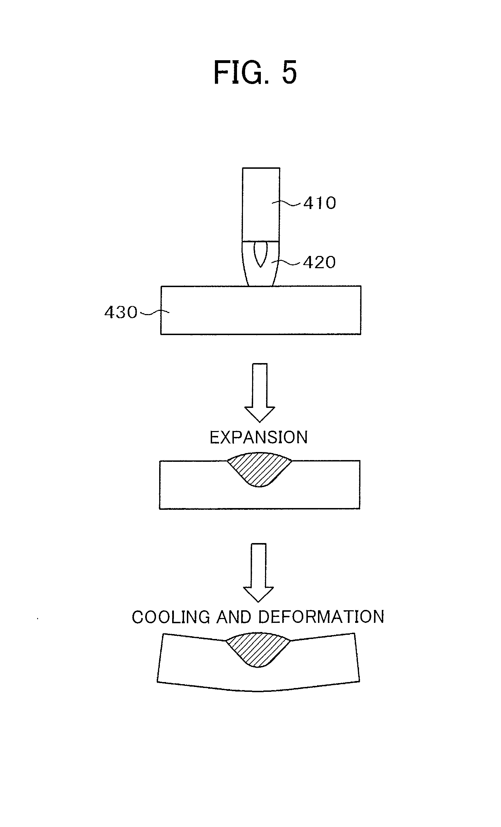

To perform the distortion elimination, in general, the modification method by local heating and cooling is employed, that is, a method by which a product surface is locally heated to a temperature near the melting point by a burner or the like, and then cooled. FIG. 5 shows the mechanism of the modification method by local heating and cooling. At the time of heating, due to local heat expansion, a product 430 is formed into a convex shape with the heated portion as the top. On the other hand, the non-heated portion does not expand and therefore serves as a restraint. Thus, the heated portion is subjected to plastic deformation.

In a subsequent cooling process, the heated portion is subjected to heat shrink. However, by the above-described plastic deformation, the heated portion is formed into a shape closer to a concave shape than that prior to heating. In this manner, the portion formed into a convex shape due to welding distortion is equalized to perform shape correction. However, this distortion elimination operation leads to an increase in the number of man-hours, which causes a problem in terms of production lead time and cost. In particular, in the welding of the motor supports, the gearbox supports, and the caliper supports to the middle frames in FIG. 3, large welding distortion is caused. Therefore, there is a problem that a lot of man-hours are needed to eliminate distortion.

Further, the above-described modification method by local heating and cooling requires proficient skills. In recent years, however, the decrease in the number of workers and the handing down of skills, which are caused by the aging of workers, have become issues. For these reasons, a welding method (welding with small distortion) that eliminates the need for distortion elimination and minimizes welding distortion is required.

The laser and the electron beam disclosed in Japanese Published Unexamined Patent Application Nos. 2008-55952, and 2008-149913 each have features that the power density can be increased and the heat input area can be reduced relative to the arc. Thus, welding is performed with a high power density and in a small heat input area, thereby limiting a melting zone and a heat affected zone to small areas and allowing a reduction in welding distortion. However, there is a problem that laser welding machines and electron beam welding machines offering a high power density are expensive in cost of equipment.

The object technology disclosed in Japanese Published Unexamined Patent Application No. 2008-93683 is a solution to distortion due to mechanical pressure rather than distortion due to heat produced in welding, and does not cover thermal distortion, or distortion caused by melting of welding materials, in arc welding. Further, if a welded object has a complicated shape, the spot welding is difficult to adopt, in view of its welding method.

Other possible methods for welding with small distortion include FSW (Friction Stir Welding) which is used mainly for joining aluminum. The FSW is a method in which two plates to be joined butt against each other in a gap ranging from submillimeter to several millimeters, and a threaded joining tool is rotated within the gap to stir and mix particles of both plates so as to join the plates.

However, in the case of a bogie chassis made of iron, it is impossible to sufficiently increase the hardness of the joining tool relative to the bogie chassis. This causes more extreme fatigue of the tool during welding than that of the welding of aluminum. Therefore, there is a problem that the tool life is shortened, and the frequency of tool replacement increases, resulting in high cost.

Even in the case where an arc is used for the welding heat source, the bogie chassis is mechanically restrained to another structure, thereby allowing an improvement in the whole stiffness and a reduction in welding distortion. However, if the structure to which the bogie chassis is restrained does not have the stiffness increased to some extent, then the structure is easily deformed by deformation force of the bogie chassis at the time of welding. Thus, no sufficient distortion reduction effect can be expected.

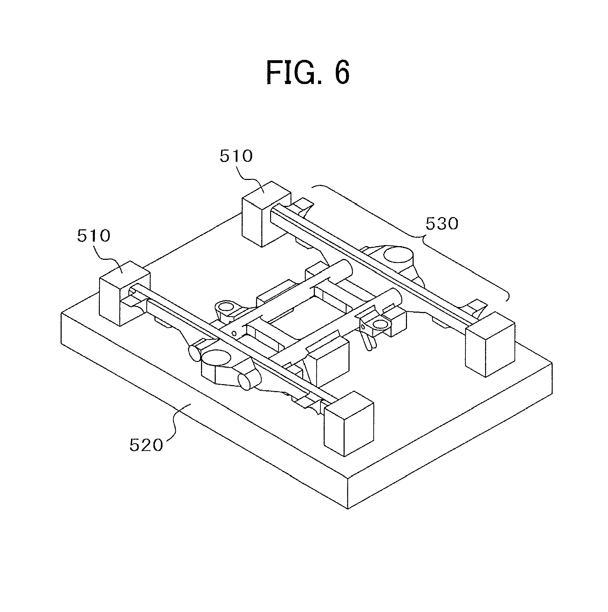

The bogie chassis is made of iron having a thickness ranging from several millimeters to a dozen or so millimeters, and has the size of several meters. As the structure to which the bogie chassis is restrained, therefore, an iron surface plate of the size equal to or larger than the bogie chassis as shown in FIG. 6, or an iron jig of the same size as the bogie chassis is used. Restraint methods include vising and welding. The stiffness of this restraint portion also needs to be considered to be impervious to deformation caused at the time of welding. In addition to the mechanical restraint, welding (pre-modifying) while applying force opposite in direction to the deformation due to welding is also effective.

It should be noted that, in order to ensure weld quality, the MAG welding or the MIG welding needs to be performed with a welding torch facing vertically from top to bottom. On the other hand, the bogie chassis has plural welded places in all directions, vertically and horizontally. In the bogie chassis welding, therefore, a device, called a positioner, capable of freely and quickly changing the orientation of the bogie chassis is commonly used. Therefore, in the case of performing the restraint aimed at reducing welding distortion, if a surface plate horizontal to the ground is used as the structure to which the bogie chassis is restrained, the orientation of the bogie chassis is fixed, and this causes a problem.

For the above reasons, in order to reduce in welding distortion of the bogie chassis by restraint or pre-modifying, it is necessary to use an iron jig of almost the same size as the bogie chassis. However, in the case where welding is carried out by hand, the jig becomes an obstacle, leading to problems such as a loss of workability and a decrease in efficiency.

It should be noted that, in the case of a hollow member such as the bogie chassis, the jig may be installed and restrained within the hollow member. There is, for example, a method in which a solid bar made of iron is inserted into the middle frame having a circular section and both are restrained. Thus, the above-described problem of welding workability can be eliminated. However, since the jig is inserted into the middle frame, the size of the jig cannot be made equal to or larger than that of the middle frame. Therefore, there is a problem that it is difficult to increase the stiffness of the jig. There is also a problem that it is difficult to provide a mechanism that is removable after welding while ensuring the stiffness of the restraint portion.

As described above, in known welding methods, it has been impossible to simultaneously achieve low cost, high efficiency, and distortion reduction. Accordingly, a problem of the present invention is to enable joining of various structures at low cost by arc welding with small distortion, at the time of manufacturing a bogie chassis for a rail car.

EP685377 discloses a bogie chassis. US4465220 discloses a device for supporting weld underbead. JP2008-055952 discloses a railroad vehicle truck structure and method of manufacturing the same. JP2008-093683 discloses a resistance welding method of a hollow tubular body to a plate.

### SUMMARY OF THE INVENTION

The present invention addresses the above-described problems, and the specific measures are as follows.
(1) According to a first aspect of the present invention, there is provided a manufacturing method of a bogie chassis for a rail car according to claim 1.
(2) In the manufacturing method of the bogie chassis for the rail car described in (1), preferably, a material of the holder is made up of multiple fibers.
(3) In the manufacturing method of the bogie chassis for the rail car described in (1), the holder may be externally attached with a metal sheet.
(4) In the manufacturing method of the bogie chassis for the rail car described in (1), the fluid may be gas.
(5) In the manufacturing method of the bogie chassis for the rail car described in (4), the gas may be air.
(6) In the manufacturing method of the bogie chassis for the rail car described in (1), the fluid may be liquid.
(7) In the manufacturing method of the bogie chassis for the rail car described in (6), the liquid may be water.
(8) In the manufacturing method of the bogie chassis for the rail car described in (1), the fluid may be powder.
(9) In the manufacturing method of the bogie chassis for the rail car described in (8), the arrangement may be such that the powder is iron powder and has an average diameter equal to or smaller than a thickness of each of the middle frames.
(10) In the manufacturing method of the bogie chassis for the rail car described in (8), the arrangement may be such that the powder is sand and has an average diameter equal to or smaller than a thickness of each of the middle frames.
(11) In the manufacturing method of the bogie chassis for the rail car described in any one of (4) to (7), the fluid may be forced into the holder by using a pump.
(12) According to a second aspect of the present invention, there is provided a manufacturing method of a bogie chassis for a rail car according to claim 12.
(13) According to a third aspect of the present invention, there is provided a manufacturing method of a bogie chassis for a rail car according to claim 13.
(14) In the manufacturing method of the bogie chassis for the rail car described in (13), distortion in the arc welding may be prevented by frictional force generated by bringing the elastic structure into contact with the inner wall of the middle frame and pressing the structure against the inner wall of the middle frame.
(15) In the manufacturing method of the bogie chassis for the rail car described in (13), preferably, the elastic structure is made of iron.
(16) In the manufacturing method of the bogie chassis for the rail car described in (14), a screw straightly-moving mechanism or a hydraulic jack may be used for pressing the elastic structure against the inner wall of the middle frame.
(17) In the manufacturing method of the bogie chassis for the rail car described in (16), a ceramic sheet may be interposed between the straightly-moving mechanism or the hydraulic jack and portions of the structure in contact with the middle frame.
(18) In the manufacturing method of the bogie chassis for the rail car described in (13), the arrangement may be such that air having a temperature lower than that of the elastic structure is blown on the structure during welding.
(19) In the manufacturing method of the bogie chassis for the rail car described in (18), the air may be sent through inside the middle frame.

According to an aspect of the present invention, when joining of members such as the motor supports to the middle frames of the bogie chassis is performed by arc welding, it is possible to realize arc welding with small distortion. In addition, it is possible to manufacture a bogie chassis for a rail car at low cost without deteriorating the workability at the time of welding.

### BRIEF DESCRIPTION OF THE DRAWINGS

FIG. 1 is a schematic diagram showing a manufacturing method of middle frames of a bogie chassis for a rail car according to a first embodiment of the present invention;
FIG. 2 shows a typical bogie truck structure for a rail car;
FIGS. 3A and 3B show a typical bogie chassis structure for a rail car;
FIG. 4 is a schematic diagram of welding distortion;
FIG. 5 is a schematic diagram of the mechanism of the modification by local heating and cooling;
FIG. 6 is a schematic diagram of a bogie chassis restrained to a surface plate;
FIGS. 7A to 7E show one manufacturing flow of the middle frames of the bogie chassis for the rail car according to the first embodiment of the present invention;
FIGS. 8A to 8D show another manufacturing flow of the middle frames of the bogie chassis for the rail car according to the first embodiment of the present invention;
FIGS. 9A to 9D show a manufacturing flow of middle frames of a bogie chassis for a rail car according to a second embodiment of the present invention;
FIG. 10 illustrates in detail a welding method according to the second embodiment of the present invention; and
FIGS. 11A to 11C show a manufacturing flow of middle frames of a bogie chassis for a rail car according to a third embodiment of the present invention.

### DESCRIPTION OF PREFERRED EMBODIMENTS

Hereinafter, embodiments of the present invention will be described in detail.

### [First embodiment]

FIG. 1 is a perspective view showing the outline of a first embodiment of the present invention. Referring to FIG. 1, additional frames 620, caliper supports 630, gearbox supports 640, motor supports 650 and the like are welded to middle frame pipes 610 by arc welding. Each weld zone 680 is subjected to arc welding. For welding these structures to each of the middle frame pipes 610, a hollow holder 660 is inserted into the middle frame pipe 610. The holder 660 is filled with fluid 670. After that, arc welding is performed with the holder 660 sealed. In FIG. 1, the action of the holder 660 and the fluid 670 can prevent the middle frame pipe 610 from being deformed at the time of arc welding.

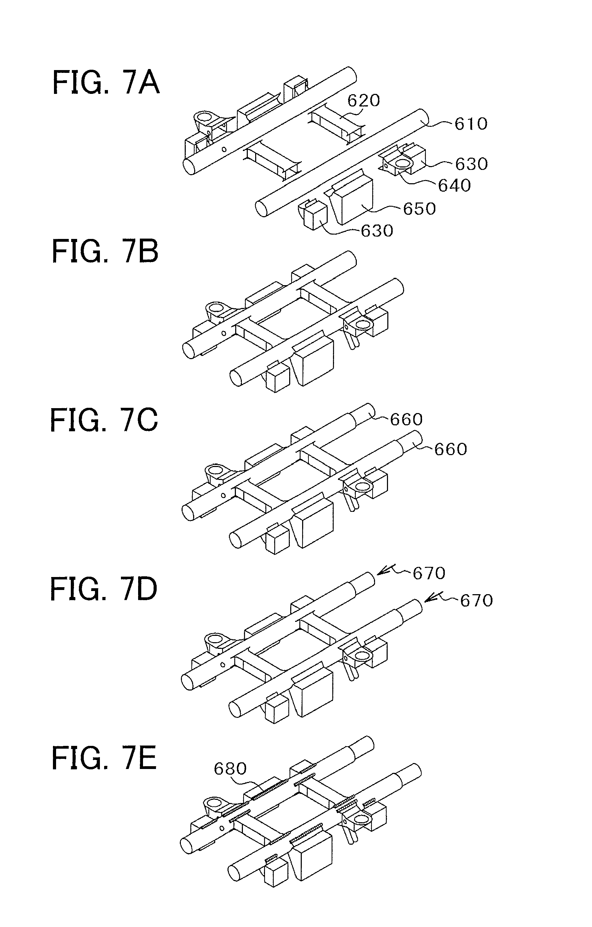

Hereinafter, a manufacturing flow of a bogie chassis for a rail car according to the first embodiment of the present invention will be described with reference to FIGS. 7A to 7E. In middle frame manufacturing of the bogie chassis that is composed of side frames and middle frames, with respect to welding of the additional frames 620, the caliper supports 630, the gearbox supports 640, and the motor supports 650 to the pipes 610, firstly, as shown in FIG. 7A, members such as the various kinds of supports and the pipes 610 are prepared. Next, as shown in FIG. 7B, those members are assembled into a target shape. At this time, in order to keep the shape, it is common to perform intermittent welding between the members. This process is referred to as first welding, and subsequent continuous welding is referred to as second welding. Next, as shown in FIG. 7C, the hollow holder 660 is inserted into the hollow pipe 610. After that, as shown in FIG. 7D, the holder 660 is filled with the fluid 670 and sealed. In this state, as shown in FIG. 7E, the second welding is performed. This welding flow allows a reduction in welding distortion, without deteriorating welding workability, with the fluid 670 filled in the holder 660 serving as resistance.

Next, the first embodiment of the present invention will hereinafter be described in detail step by step. Firstly, the respective members (the pipes 610, the additional frames 620, the caliper supports 630, the motor supports 650, and the gearbox supports 640) of the middle frames are prepared. Next, these members are assembled. At this time, jigs are commonly used to help accurate positioning of the respective members. After the positioning of the members is finished, in order to keep that state, the first welding is performed. In the first welding, intermittent welding between the members is performed with a weld length of about several tens of millimeters, at a pitch of about several hundred millimeters. Any welding method may be employed. Typically, the MIG welding or the MAG welding is selected, in the same manner as the second welding. It should be noted that, since welding distortion in the first welding is small, this distortion is not taken into account here.

Next, the holder 660 is inserted into the pipe 610. The holder 660 is preferably made of a flexible cloth-like material. This is because the holder 660 made of such material can be readily inserted and removed from the pipe 610, and when the holder 660 is filled with the fluid 670, the holder 660 is easily brought into close contact with a pipe inner wall with no space therebetween. Further, the holder 660 is preferably in the same cylindrical shape as the pipe 610 such that when the holder 660 is filled with the fluid 670, the holder 660 is brought into close contact with the pipe inner wall with no space therebetween. It should be noted that the cloth-like material refers to a structure made of multiple fibers. To keep airtightness or liquid-tightness, preferably, an airtight or liquid-tight sheet, such as a plastic sheet, is disposed within the holder 660. It should be noted that the airtightness does not refer to the property of keeping a vacuum. Instead, it is only necessary to have the property of keeping high-pressure gas within the holder 660 during arc welding.

It is to be noted that, in welding to be hereinafter described, a large pressure is applied to the holder 660 by reaction to fluid compression. In a portion at which the holder 660 is brought into close contact with the pipe inner wall, the holder 660 is received and supported by the pipe 610, and therefore there is hardly a possibility of damage to the holder 660. On the other hand, in another portion, namely, in an exposed portion, such as a holder leading end, of the holder 660 having no contact with the pipe 610, there is a possibility that the holder 660 is damaged due to the pressure during welding. However, this may be prevented by reinforcing the outside of a corresponding portion of the holder 660 with a metal sheet or the like, or alternatively, for example by covering one end of the pipe 610 with a metal sheet welded thereto.

Next, the holder 660 is filled with the fluid 670. Examples of the fluid 670 include liquids or high-pressure gases. Liquids have a very high bulk modulus and there is hardly a change in volume. Therefore, for the reason to be described later, if a liquid is used in the present invention, a great benefit can be achieved. On the other hand, gases undergo changes in volume easily under ordinary pressure. However, under high pressure, the bulk modulus of gases increases, and a benefit close to that of liquids can be achieved. Preferably, water is used as the liquid and air is used as the gas since these are inexpensive. As a gas filling technique, a pump is suitable. This is because the pump can efficiently force gas into the holder 660 and form high-pressure gas. Also as a liquid filling method, a pump is effective. The reason for this is described below. Even if it is intended to fully fill the holder 660 with fluid 670, an air bubble can come accidentally into the holder 660. When the volume of this air bubble is large, the fluid 670 is easily compressed at the time of welding, resulting in lessening of the distortion reduction effect according to this embodiment of the present invention. However, in the case where the holder 660 is filled with liquid at high pressure by the pump, even if an air bubble comes into the holder 660, the volume deformation due to compression during the subsequent welding can be reduced since the liquid is subjected to precompression at high pressure.

It should be noted that the fluid 670 to be filled in the holder 660 may be powder. Examples of materials include sand and iron powder, which are inexpensive. Although the diameter of the powder must be small to some extent, as long as its average diameter is equal to or smaller than a thickness of the pipe 610, the welding distortion reduction effect can be achieved. It should be noted that the fluid 670 to be filled in the holder 660 may be a mixture of the above liquid, gas, and powder.

After having been filled with the fluid 670, the holder 660 is sealed. Then the second welding between the members is performed. At this time, welding distortion is reduced, for reasons to appear hereinafter. When a member such as the caliper support 630 is welded to the pipe 610, the pipe 610 tends to bend around the weld zone 680, and at this time, the volume inside the pipe 610 is generally reduced. Here, in the case of using this process flow, the fluid 670 filled in the pipe 610 is subjected to compression. However, since the fluid 670 has a very high bulk modulus, the fluid 670 is hardly reduced in volume. In order to cause a similar degree of bending, therefore, in addition to the force to bend the holder 660, deformation for covering a reduction in volume caused by bending needs to be caused in another portion (for example, a holder leading end). Therefore, the deformation in another portion requires greater force than that of the case where the pipe 610 is simply bent. Consequently, bending by welding is reduced.

After the welding is finished, the holder 660 filled with the fluid 670 is removed to the outside of the pipe 610. At this time, the holder 660 can be pulled out with small force by previously removing the fluid 670. If the fluid 670 is gas, its removal may be accomplished by causing leaks inside and outside the holder 660. If the fluid is liquid such as water, its removal may be accomplished, for example by using a pump or inclining the middle frame. If the fluid is powder, its removal may be accomplished by inclining and shaking the pipe 610, or the like. Here, if the powder is a magnetic material such as iron powder, the use of a magnet allows more efficient removal. For example, an electromagnetic bar is brought close to an end of the pipe 610 filled with iron powder to apply magnetic force, thereby partially sticking the iron powder onto the electromagnet. Thereafter, the electromagnet with the iron powder stuck thereon is moved away from the pipe 610 to release the magnetic force, thereby allowing the iron powder to fall by gravity. Repeating this process allows efficient removal of iron powder to the outside of the pipe 610. This is the end of the welding with small distortion to the pipe 610 in each of the middle frames.

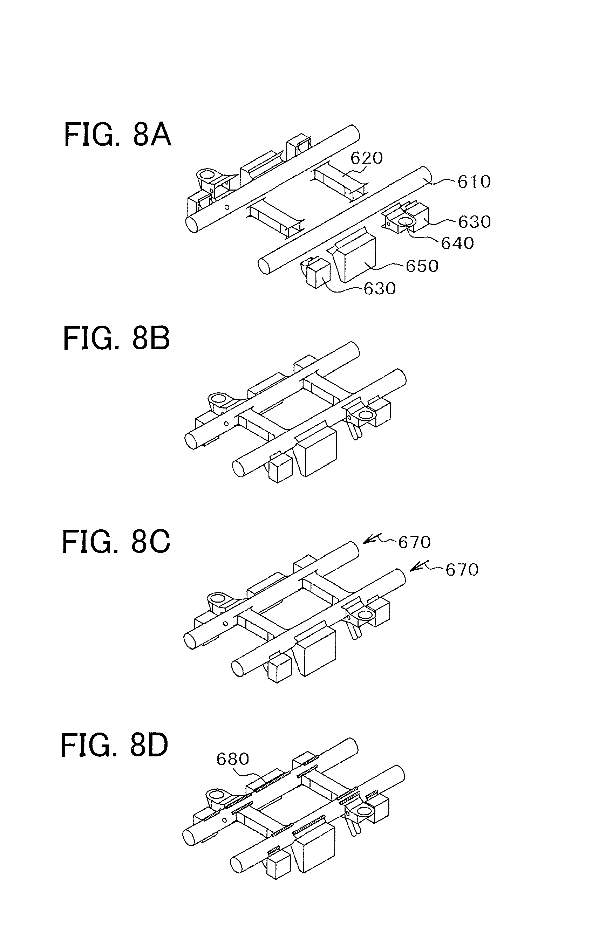

It should be noted that the foregoing description is in terms of the case where, firstly, the holder 660 is inserted into the pipe 610, and then filled with the fluid 670. However, the pipe 610 may be directly filled with the fluid 670 without using the holder 660, in which the same effect as above can also be obtained. FIGS. 8A to 8D show this process. Firstly, the various kinds of supports and the pipes 610 are prepared (see FIG. 8A). Next, those are assembled into a target shape (see FIG. 8B). Up to this step, the process is the same as shown in FIGS. 7A and 7B.

Next, each of the hollow pipes 610 is directly filled with the fluid 670 without using a hollow holder (see FIG. 8C). Therefore, the pipe 610 without holes must be used, or if there is a hole in the pipe 610, the hole needs to be temporarily closed. With the pipe 610 filled with the fluid 670, the second welding to the pipe 610 of the respective members is performed (see FIG. 8D). After the welding is finished, the fluid 670 is removed to the outside of the pipe 610. By the process shown in FIGS. 8A to 8D, distortion in arc welding can be reduced, in the same manner as that shown in FIGS. 7A to 7E.

The above is welding with small distortion of the middle frames of the bogie chassis for the rail car according to the first embodiment of the present invention. Through simulation of heat deformation, it has been confirmed that the above-described first embodiment achieves a 50% reduction in distortion. It should be noted that the present invention is not limited to this embodiment, that is, a case of applying the present invention to the middle frames, but also, in addition to rail cars, can be applied to every structure having a through hollow, such as a truck chassis frame and powerplant piping, as well as the side frames.

### [Second embodiment]

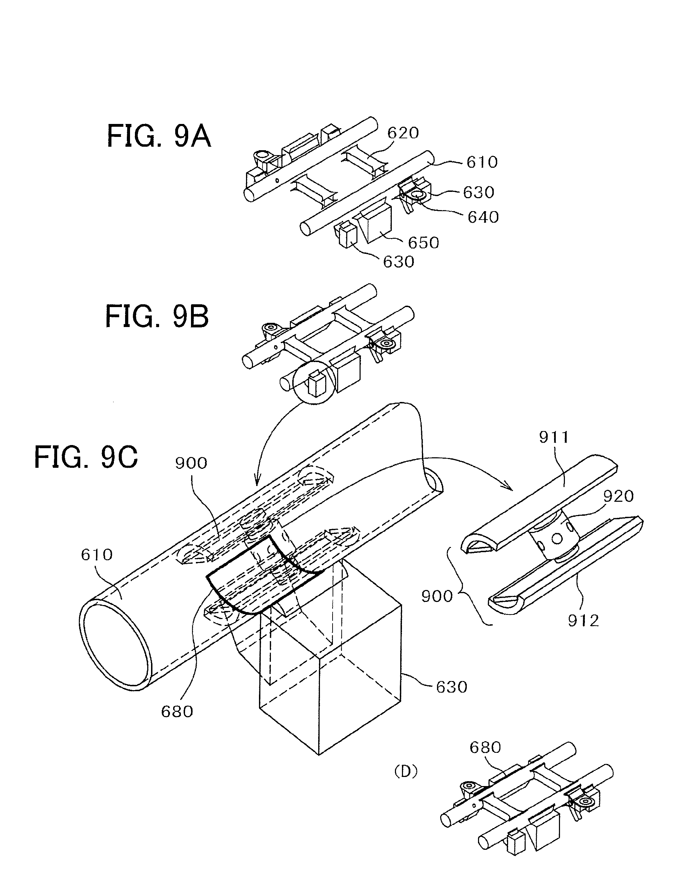

Hereinafter, a manufacturing flow of a bogie chassis for a rail car according to a second embodiment of the present invention will be described with reference to FIGS. 9A to 9D. With respect to welding of the additional frames 620, the caliper supports 630, the gearbox supports 640, and the motor supports 650 to the pipes 610 in the middle frame manufacturing, firstly, as shown in FIG. 9A, members such as the various kinds of supports and the pipes 610 are prepared. Next, as shown in FIG. 9B, those members are assembled into a target shape, and the first welding is performed. After that, as shown in FIG. 9C, an elastic structure 900 having a removable mechanism is inserted into the pipe 610 in a position which corresponds to that of each support (the caliper support 630 is shown in this figure), and then brought into close contact with a pipe inner wall. Next, as shown in FIG. 9D, the second welding is performed. Thereafter, cooling is performed with the elastic structure 900 put in the pipe 610. After cooling, the elastic structure 900 is removed. This welding flow also allows a reduction in welding distortion, without deteriorating welding workability, with the elastic structure 900 in the pipe 610 serving as resistance.

Next, the second embodiment of the present invention will hereinafter be described in detail step by step. Firstly, the respective members (the pipes 610, the additional frames 620, the caliper supports 630, the motor supports 650, and the gearbox supports 640) of the middle frames are prepared. Next, these members are accurately positioned and assembled by using jigs, and then the first welding is performed. Then the elastic structure 900 is inserted into the pipe 610 in a position which corresponds to that of each support (the caliper support 630 is shown in this figure). The structure 900 is composed of contact portions 911 and 912 each having a shape to be brought into contact with an inner portion of the pipe 610, and a straightly moving portion 920 allowing adjustment of the distance between the contact portions 911 and 912. The structure 900 should be heatproof so that it can endure an increased temperature due to the transmission of welding heat, and also high-temperature-tolerant to counteract welding deformation. For this reason, the structure 900 is preferably made of iron alloy. Also, for the same reason, the straightly moving portion 920 preferably includes a screw mechanism.

Next, the straightly moving portion 920 is adjusted to increase the distance between the contact portions 911 and 912 so as to bring the contact portions 911 and 912 into close contact with the pipe inner wall. Furthermore, when the screw is turned so as to increase the distance between the contact portions 911 and 912, the straightly moving portion 920 is stretched between the contact portions 911 and 912 to thereby increase the pressure on the pipe inner wall, so that the elastic structure 900 is joined to the pipe inner wall by frictional force.

Next, the welding of each support is performed. At this time, the elastic structure 900 serves as resistance to welding deformation (bending around the weld zone 680), so that welding distortion is reduced. During welding, the elastic structure 900 is located within the pipe 610. Therefore, the elastic structure 900 has no adverse effect on welding workability. Moreover, it has been previously known that, after welding, cooling is performed with the elastic structure 900 joined to the pipe 610, thereby allowing a larger reduction in distortion than that of the case where the elastic structure 900 is removed shortly after welding.

After cooling, the screw is turned so as to reduce the distance between the contact portions 911 and 912, and the elastic structure 900 is removed. This is the end of the welding with small distortion to the pipe 610 in each of the middle frames.

The above is the welding with small distortion of the middle frames of the bogie chassis for the rail car according to the second embodiment of the present invention. In the case of applying the above-described second embodiment to the caliper support weld zone, a 20% reduction in distortion has already been confirmed through experiments. It should be noted that the present invention is not limited to this embodiment, that is, a case of applying the present invention to the middle frames, but, in addition to rail cars, can be applied to every structure having a through hollow, such as a truck chassis frame and powerplant piping, as well as the side frames.

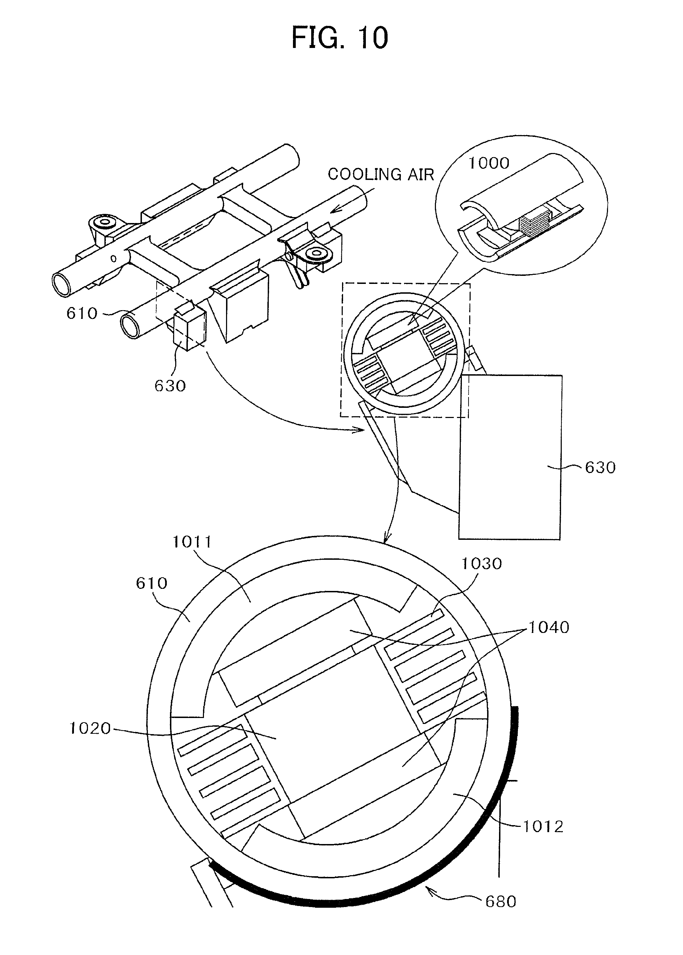

Note that, just bringing the elastic structure 900 into close contact with the pipe inner wall provides resistance to deformation during welding, so that a distortion reduction effect can be obtained. However, a further reduction in distortion is made possible by applying large propping force between the contact portions 911 and 912. The reason for this is described below. Welding distortion is caused by heat shrink by welding. However, the welding distortion can be reduced by the application of back tensile stress. The propping force acts as circumferential tensile stress of the pipe 610. The tensile stress of the pipe 610 increases with increasing propping force. Therefore, the elastic structure 900 is preferably stretched to the fullest without yielding. This requires turning the screw at a large torque using a claw bar or the like. It is to be noted that further propping force can be obtained by using a hydraulic jack in place of the straightly moving mechanism, and as a result a further distortion reduction effect is expected. However, hydraulic jacks such as oil-hydraulic jacks have an operating temperature limit of about 100°C. Therefore, simple replacement with the hydraulic jack might carry the risk of oil leaks or the like with increase of temperature due to the transmission of welding heat. In order to avoid this, it is necessary to interpose a thermal insulation board between the contact portion 911 and the straightly moving portion 920 so as to prevent heat from being transmitted to the straightly moving portion 920, and cool the straightly moving portion 920. FIG. 10 shows a schematic diagram of the welding with small distortion using a hydraulic jack. An elastic structure 1000 includes a hydraulic jack 1020 between contact portions 1011 and 1012. Also, the elastic structure 1000 includes a thermal insulation board 1040 between both contact portions 1011 and 1012 and the hydraulic jack 1020. A radiating fin 1030 is attached to each side wall of the hydraulic jack 1020. The thermal insulation board 1040 should have high stiffness and compressive strength to resist welding deformation, in addition to the heat resistance property to resist an increased temperature due to welding and the heat insulation property (the low thermal conductivity). Therefore, the thermal insulation board 1040 is preferably made of a low thermal conducting ceramic material such as Photoveel. Also, the radiating fin 1030 is preferably made of an inexpensive material having good thermal conductivity, such as aluminum or copper.

In welding, the elastic structure 1000 is inserted into the middle frame pipe 610 corresponding to a weld position of each support. Next, the hydraulic jack 1020 is jacked up to apply propping force. Further, air is blown on the elastic structure 1000, thereby cooling the elastic structure 1000. If air is blown, by an air blower, into the pipe 610 from the vicinity of a pipe opening away from the weld zone 680, the air having a temperature lower than that in the vicinity of the weld zone 680 is reliably blown on the elastic structure 1000, with the inside of the pipe 610 as a flow passage, and therefore the hydraulic jack 1020 can be efficiently cooled. In this state, welding is performed. At this time, the tensile stress caused by the propping force of the jack 1020 counteracts the heat shrink by welding causing welding deformation, and the elastic structure 1000 also resists welding deformation (bending around the weld zone 680). These two superposed actions lead to a reduction in welding distortion. Moreover, after welding, cooling is performed with the elastic structure 1000 joined to the pipe 610, thereby achieving a further reduction in distortion.

After cooling, jack-up is released, and the elastic structure 1000 is removed. This is the end of the welding with small distortion to the middle frame pipes 610 using the hydraulic jacks 1020.

### [Third embodiment]

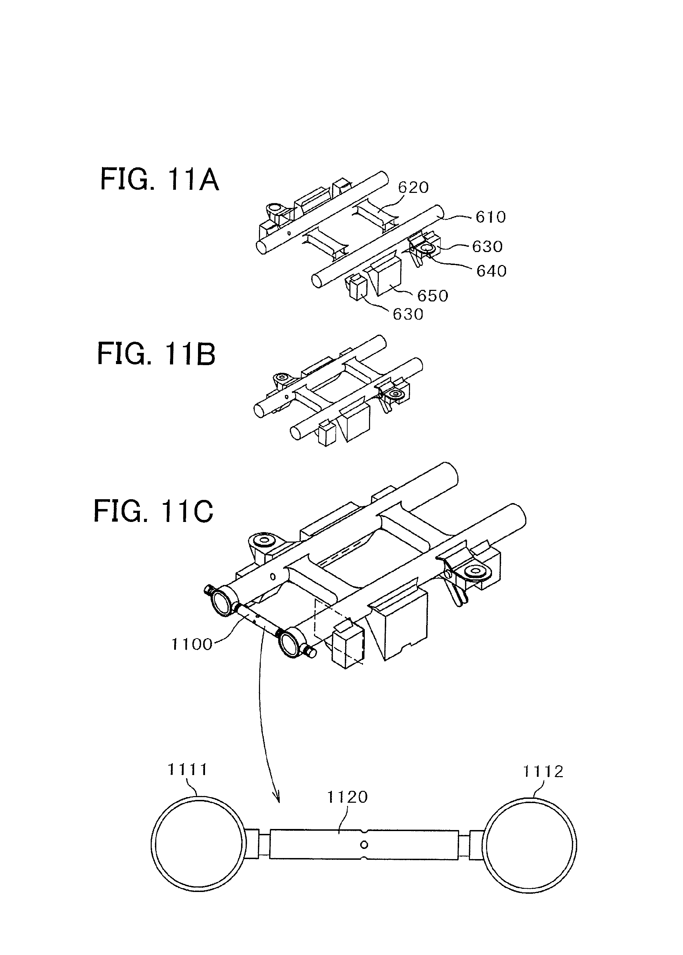

Hereinafter, a manufacturing flow of a bogie chassis for a rail car according to a third embodiment of the present invention will be described with reference to FIGS. 11A to 11C. With respect to welding of the additional frames 620, the caliper supports 630, the gearbox supports 640, and the motor supports 650 to the pipes 610 in the middle frame manufacturing, firstly, as shown in FIG. 11A, members such as the various kinds of supports and the pipes 610 are prepared. Next, as shown in FIG. 11B, those members are assembled into a target shape, and the first welding is performed. After that, as shown in FIG. 11C, a link-chain jig 1100 is externally coupled between the pipes 610, and then the second welding is performed. Thereafter, cooling is performed with the link-chain jig 1100 coupled between the pipes 610. After cooling, the link-chain jig 1100 is removed. Since the link-chain jig 1100 is coupled between the pipes 610 in a position away from the weld zone 680 of each support, it is possible to reduce welding distortion, without deteriorating welding workability, with the link-chain jig 1100 serving as resistance to welding deformation.

Next, the third embodiment of the present invention will hereinafter be described in detail step by step. Firstly, the respective members (the pipes 610, the additional frames 620, the caliper supports 630, the motor supports 650, and the gearbox supports 640) of the middle frames are prepared. Next, these members are accurately positioned and assembled by using jigs, and then the first welding is performed. Then the link-chain jig 1100 is coupled between the pipes 610. As shown in FIG. 11C, the link-chain jig 1100 is composed of contact portions 1111 and 1112 each having a shape to be brought into external contact with the pipe 610, and a straightly moving portion 1120 allowing adjustment of the distance between the contact portions 1111 and 1112. It should be noted that, even if the contact portions 1111 and 1112 are not completely brought into external contact with the respective pipes 610, almost the same distortion reduction effect can be obtained by joining such as vising. The link-chain jig 1100 should be heatproof so that it can endure an increased temperature due to welding, and also high-temperature-tolerant to counteract welding deformation. For this reason, the link-chain jig 1100 is preferably made of iron alloy. Also, for the same reason, the straightly moving portion 1120 preferably includes a screw mechanism.

Next, the welding of each support is performed. At this time, the link-chain jig 1100 serves as resistance to welding deformation (bending) of the pipes 610, so that welding distortion is reduced. Moreover, it has been known that, after welding, cooling is performed with the link-chain jig 1100 joined to the pipes 610, thereby allowing a larger reduction in distortion than that of the case where the link-chain jig 1100 is removed shortly after welding.

After cooling, the straightly moving portion 1120 is adjusted, thereby removing the link-chain jig 1100. This is the end of the welding with small distortion to the middle frame pipes 610 using the link-chain jig 1100. Through experiments, it has been confirmed that the above-described third embodiment achieves a 75% reduction in distortion in the ends of the pipes 610 in the direction of the distance between the pipes 610. It should be noted that the present invention is not limited to this embodiment, that is, a case of applying the present invention to the middle frames, but can be applied to any structure, such as the middle frames or the side frames, with two members coupled in parallel.

## Claims

1. A manufacturing method of a bogie chassis for a rail car including: a pair of side frames; a pair of middle frames coupled between the side frames; a pair of additional frames (620) coupled between the middle frames; a pair of motor supports (650) and a pair of gearbox supports (640), the motor supports being coupled to the middle frames (610), the gearbox supports being coupled to the middle frames; and two pairs of caliper supports (630) coupled one pair to each side of the middle frames, **characterized in that** the method comprises the steps of:
inserting a hollow holder (660) into each of the middle frames;
filling the holder with high bulk modulus fluid (670) and sealing the holder; and
joining at least one of the pair of motor supports, the pair of gearbox supports, and the pairs of caliper supports to the pair of middle frames by arc welding, the bulk modulus of the fluid being sufficiently high to reduce or prevent distortion caused by the arc welding.

2. The manufacturing method of the bogie chassis for the rail car according to Claim 1, wherein a material of the holder is made up of multiple fibers.

3. The manufacturing method of the bogie chassis for the rail car according to Claim 1, wherein the holder is externally attached with a metal sheet

4. The manufacturing method of the bogie chassis for the rail car according to Claim 1, wherein the high bulk modulus fluid is gas under compression.

5. The manufacturing method of the bogie chassis for the rail car according to Claim 4, wherein the gas under compression is air.

6. The manufacturing method of the bogie chassis for the rail car according to Claim 1, wherein the high bulk modulus fluid is liquid under compression.

7. The manufacturing method of the bogie chassis for the rail car according to Claim 6, wherein the liquid under compression is water.

8. The manufacturing method of the bogie chassis for the rail car according to Claim 1, wherein the high bulk modulus fluid is powder.

9. The manufacturing method of the bogie chassis for the rail car according to Claim 8, wherein the powder is iron powder and has an average diameter equal to or smaller than a thickness of each of the middle frames.

10. The manufacturing method of the bogie chassis for the rail car according to Claim 8, wherein the powder is sand and has an average diameter equal to or smaller than a thickness of each of the middle frames.

11. The manufacturing method of the bogie chassis for the rail car according to any one of Claims 4 to 7, wherein the fluid is forced into the holder by using a pump.

12. A manufacturing method of a bogie chassis for a rail car including: a pair of side frames; a pair of middle frames coupled between the side frames; a pair of additional frames (620) coupled between the middle frames; a pair of motor supports (650) and a pair of gearbox supports (640), the motor supports being coupled to the middle frames, the gearbox supports being coupled to the middle frames; and two pairs of caliper supports (630) coupled one pair to each side of the middle frames, **characterized in that** the method comprises the steps of:
filling the middle frames with high bulk modulus fluid (670) and sealing the middle frames; and
joining at least one of the pair of motor supports, the pair of gearbox supports, and the pairs of caliper supports to the pair of middle frames by arc welding, the bulk modulus of the fluid being sufficiently high to reduce or prevent distortion caused by the arc welding.

13. A manufacturing method of a bogie chassis for a rail car including: a pair of side frames; a pair of middle frames coupled between the side frames; a pair of additional frames (620) coupled between the middle frames; a pair of motor supports (650) and a pair of gearbox supports (640), the motor supports being coupled to the middle frames, the gearbox supports being coupled to the middle frames; and two pairs of caliper supports (630) coupled one pair to each side of the middle frames, **characterized in that** the method comprises the steps of:
inserting an elastic structure (900, 1000) into each of the middle frames;
bringing the structure into close contact with an inner wall of the middle frame; and
joining at least one of the pair of motor supports, the pair of gearbox supports, and the pairs of caliper supports to the pair of middle frames by arc welding, the close contact of the elastic structure with the inner wall being sufficient to reduce or prevent distortion caused by the arc welding.

14. The manufacturing method of the bogie chassis for the rail car according to Claim 13, wherein distortion in the arc welding is prevented by frictional force generated by bringing the elastic structure into close contact with the inner wall of the middle frame and pressing the structure against the inner wall of the middle frame.

15. The manufacturing method of the bogie chassis for the rail car according to Claim 13, wherein the elastic structure is made of iron.

16. The manufacturing method of the bogie chassis for the rail car according to Claim 14, wherein a screw straightly-moving mechanism (920) or a hydraulic jack (1020) is used for pressing the elastic structure against the inner wall of the middle frame.

17. The manufacturing method of the bogie chassis for the rail car according to Claim 16, wherein a ceramic sheet (1040) is interposed between the straightly-moving mechanism or the hydraulic jack (1020) and portions of the structure in close contact with the middle frame (1011, 1012).

18. The manufacturing method of the bogie chassis for the rail car according to Claim 13, wherein air having a temperature lower than that of the elastic structure is blown on the structure during welding.

19. The manufacturing method of the bogie chassis for the rail car according to Claim 18, wherein the air is sent through inside the middle frame.

## Patentansprüche

1. Herstellverfahren eines Drehgestellchassis für ein Schienenfahrzeug, umfassend:
ein Paar Seitenrahmen;
ein Paar Mittelrahmen, die zwischen den Seitenrahmen gekoppelt sind;
ein Paar Zusatzrahmen (620), die zwischen den Mittelrahmen gekoppelt sind;
ein Paar Motorhalterungen (650) und ein Paar Getriebekastenhalterungen (640), wobei die Motorhalterungen mit den Mittelrahmen (610) gekoppelt sind, und die Getriebekastenhalterungen mit den Mittelrahmen gekoppelt sind; und
zwei Paar Bremssattelhalterungen (630), von denen ein Paar mit jeder Seite der Mittelrahmen gekoppelt ist,
**dadurch gekennzeichnet, dass** das Verfahren die Schritte umfasst:
Einfügen eines hohlen Halters (660) in jeden der Mittelrahmen;
Füllen der Halter mit einem Fluid (670), das einen großen Kompressionsmodul aufweist, und Abdichten des Halters; und
Verbinden des Paars Motorhalterungen, des Paars Getriebekastenhalterungen, und/oder der Paare Bremssattelhalterungen mit dem Paar Mittelrahmen durch Lichtbogenschweißen, wobei der Kompressionsmodul des Fluids ausreichend groß ist, um eine durch das Lichtbogenschweißen verursachte Verformung zu reduzieren oder zu verhindern.

2. Herstellverfahren des Drehgestellchassis für das Schienenfahrzeug nach Anspruch 1, wobei ein Material des Halters aus mehreren Fasern zusammengesetzt ist.

3. Herstellverfahren des Drehgestellchassis für das Schienenfahrzeug nach Anspruch 1, wobei der Halter mit einer Metallplatte extern angebracht wird.

4. Herstellverfahren des Drehgestellchassis für das Schienenfahrzeug nach Anspruch 1, wobei das Fluid, das einen großen Kompressionsmodul aufweist, unter Druck stehendes Gas ist.

5. Herstellverfahren des Drehgestellchassis für das Schienenfahrzeug nach Anspruch 4, wobei das unter Druck stehende Gas Luft ist.

6. Herstellverfahren des Drehgestellchassis für das Schienenfahrzeug nach Anspruch 1, wobei das Fluid, das einen großen Kompressionsmodul aufweist, eine unter Druck stehende Flüssigkeit ist.

7. Herstellverfahren des Drehgestellchassis für das Schienenfahrzeug nach Anspruch 6, wobei die unter Druck stehende Flüssigkeit Wasser ist.

8. Herstellverfahren des Drehgestellchassis für das Schienenfahrzeug nach Anspruch 1, wobei das Fluid, das einen großen Kompressionsmodul aufweist, Pulver ist.

9. Herstellverfahren des Drehgestellchassis für das Schienenfahrzeug nach Anspruch 8, wobei das Pulver Eisenpulver ist und einen mittleren Durchmesser aufweist, der gleich oder kleiner als eine Dicke jedes der Mittelrahmen ist.

10. Herstellverfahren des Drehgestellchassis für das Schienenfahrzeug nach Anspruch 8, wobei das Pulver Sand ist und einen mittleren Durchmesser aufweist, der gleich oder kleiner als eine Dicke jedes der Mittelrahmen ist.

11. Herstellverfahren des Drehgestellchassis für das Schienenfahrzeug nach einem der Ansprüche 4 bis 7, wobei das Fluid durch Verwenden einer Pumpe in den Halter gedrängt wird.

12. Herstellverfahren eines Drehgestellchassis für ein Schienenfahrzeug, umfassend:
ein Paar Seitenrahmen;
ein Paar Mittelrahmen, die zwischen den Seitenrahmen gekoppelt sind;
ein Paar Zusatzrahmen (620), die zwischen den Mittelrahmen gekoppelt sind;
ein Paar Motorhalterungen (650) und ein Paar Getriebekastenhalterungen (640), wobei die Motorhalterungen mit den Mittelrahmen gekoppelt sind, und die Getriebekastenhalterungen mit den Mittelrahmen gekoppelt sind; und
zwei Paar Bremssattelhalterungen (630), von denen ein Paar mit jeder Seite der Mittelrahmen gekoppelt ist,
**dadurch gekennzeichnet, dass** das Verfahren die Schritte umfasst:
Füllen der Mittelrahmen mit einem Fluid (670), das einen großen Kompressionsmodul aufweist, und Abdichten der Mittelrahmen; und
Verbinden des Paars Motorhalterungen, des Paars Getriebekastenhalterungen, und/oder der Paare Bremssattelhalterungen mit dem Paar Mittelrahmen durch Lichtbogenschweißen, wobei der Kompressionsmodul des Fluids ausreichend groß ist, um durch Lichtbogenschweißen verursachte Verformungen zu reduzieren oder zu verhindern.

13. Herstellverfahren eines Drehgestellchassis für ein Schienenfahrzeug, umfassend:
ein Paar Seitenrahmen;
ein Paar Mittelrahmen, die zwischen den Seitenrahmen gekoppelt sind;
ein Paar Zusatzrahmen (620), die zwischen den Mittelrahmen gekoppelt sind;
ein Paar Motorhalterungen (650) und ein Paar Getriebekastenhalterungen (640), wobei die Motorhalterungen mit den Mittelrahmen gekoppelt sind, und die Getriebekastenhalterungen mit den Mittelrahmen gekoppelt sind; und
zwei Paar Bremssattelhalterungen (630), von denen ein Paar mit jeder Seite der Mittelrahmen gekoppelt ist,
**dadurch gekennzeichnet, dass** das Verfahren die Schritte umfasst:
Einfügen einer elastischen Struktur (900, 1000) in jeden der Mittelrahmen;
Bringen der Struktur in engen Kontakt mit einer Innenwand des Mittelrahmens; und
Verbinden des Paars Motorhalterungen, des Paars Getriebekastenhalterungen, und/oder der Paare Bremssattelhalterungen mit dem Paar von Mittelrahmen durch Lichtbogenschweißen, wobei der enge Kontakt der elastischen Struktur mit der Innenwand ausreichend ist, um durch Lichtbogenschweißen hervorgerufene Verformungen zu reduzieren oder zu verhindern.

14. Herstellverfahren des Drehgestellchassis für das Schienenfahrzeug nach Anspruch 13, wobei eine Verformung beim Lichtbogenschweißen durch eine Reibungskraft verhindert wird, die erzeugt wird, indem die elastische Struktur in engen Kontakt mit der Innenwand des Mittelrahmens gebracht und die Struktur gegen die Innenwand des Mittelrahmens gedrückt wird.

15. Herstellverfahren des Drehgestellchassis für das Schienenfahrzeug nach Anspruch 13, wobei die elastische Struktur aus Eisen ist.

16. Herstellverfahren des Drehgestellchassis für das Schienenfahrzeug nach Anspruch 14, wobei ein sich gerade bewegender Schraubenmechanismus (920) oder ein Hydraulikstempel (1020) verwendet wird, um die elastische Struktur gegen die Innenwand des Mittelrahmens zu drücken.

17. Herstellverfahren des Drehgestellchassis für das Schienenfahrzeug nach Anspruch 16, wobei eine Keramikplatte (1040) zwischen dem sich gerade bewegenden Mechanismus oder dem Hydraulikstempel (1020) und Abschnitten der Struktur in engem Kontakt mit dem Mittelrahmen (1011, 1012) eingefügt ist.

18. Herstellverfahren des Drehgestellchassis für das Schienenfahrzeug nach Anspruch 13, wobei Luft mit einer Temperatur niedriger als die der elastischen Struktur während des Schweißens auf die Struktur geblasen wird.

19. Herstellverfahren des Drehgestellchassis für das Schienenfahrzeug nach Anspruch 18, wobei die Luft durch eine Innenseite des Mittelrahmens geleitet wird.

## Revendications

1. Procédé de fabrication d'un châssis de bogie pour un véhicule ferroviaire comportant: une paire de châssis latéraux, une paire de châssis médians couplés entre les châssis latéraux, une paire de châssis supplémentaire (620) couplés entre les châssis médians, une paire de supports de moteur (650) et une paire de supports de boîte de vitesses (640), les supports de moteur étant couplés aux châssis médians (610), les supports de boîte de vitesses étant couplés aux châssis médians, et deux paires de supports d'étrier (630) étant couplées une paire de chaque côté des châssis médians,
**caractérisé en ce que** le procédé comporte les étapes consistant à:
insérer un support creux (660) dans chacun des châssis médians,
remplir le support avec un fluide à haut module de compressibilité volumique (670) et assurer l'étanchéité du support, et
relier au moins l'une des paires de supports de moteur, la paire de supports de boîte de vitesses, et les paires de supports d'étrier à la paire de châssis médians par soudage à l'arc, le module de compressibilité volumique du fluide étant suffisamment élevé pour réduire ou empêcher la déformation provoquée par le soudage à l'arc.

2. Procédé de fabrication du châssis de bogie pour un véhicule ferroviaire selon la revendication 1, dans lequel un matériau de support est constitué de fibres multiples.

3. Procédé de fabrication du châssis de bogie pour un véhicule ferroviaire selon la revendication 1, dans lequel le support est fixé à l'extérieur à une feuille de métal.

4. Procédé de fabrication du châssis de bogie pour un véhicule ferroviaire selon la revendication 1, dans lequel le fluide à haut module de compressibilité volumique est un gaz comprimé.

5. Procédé de fabrication du châssis de bogie pour un véhicule ferroviaire selon la revendication 4, dans lequel le gaz comprimé est de l'air.

6. Procédé de fabrication du châssis de bogie pour un véhicule ferroviaire selon la revendication 1, dans lequel le fluide à haut module de compressibilité volumique est un liquide comprimé.

7. Procédé de fabrication du châssis de bogie pour un véhicule ferroviaire selon la revendication 6, dans lequel le liquide comprimé est de l'eau.

8. Procédé de fabrication du châssis de bogie pour un véhicule ferroviaire selon la revendication 1, dans lequel le fluide à haut module de compressibilité volumique est une poudre.

9. Procédé de fabrication du châssis de bogie pour un véhicule ferroviaire selon la revendication 8, dans lequel la poudre est une poudre de fer et a un diamètre moyen égal ou inférieur à une épaisseur de chacun des châssis médians.

10. Procédé de fabrication du châssis de bogie pour un véhicule ferroviaire selon la revendication 8, dans lequel la poudre est du sable et présente un diamètre moyen égal ou inférieur à une épaisseur de chacun des châssis médians.

11. Procédé de fabrication du châssis de bogie pour un véhicule ferroviaire selon l'une quelconque des revendications 4 à 7, dans lequel est forcé dans le support à l'aide d'une pompe.

12. Procédé de fabrication du châssis de bogie pour un véhicule ferroviaire comportant :
une paire de châssis latéraux, une paire de châssis médians couplés entre les châssis latéraux, une paire de châssis supplémentaires (620) couplés entre les châssis médians, une paire de supports de moteur (650) et une paire de supports de boîte de vitesses (640), les supports de moteur étant couplés aux châssis médians, les supports de boîte de vitesses étant couplés aux châssis médians, et deux paires de supports d'étrier (630) étant couplées une paire à chaque côté des châssis médians,
**caractérisé en ce que** le procédé comporte les étapes consistant à:
remplir le support avec un fluide à haut module de compressibilité volumique (670) et assurer l'étanchéité du support, et
relier au moins l'une de la paire de supports de moteur, de la paire de supports de boîte de vitesses, et des paires de supports d'étrier à la paire de châssis médians par soudage à l'arc, le module d'élasticité volumique du fluide étant suffisamment élevé pour réduire ou empêcher la déformation provoquée par le soudage à l'arc.

13. Procédé de fabrication du châssis de bogie pour un véhicule ferroviaire comportant : une paire de châssis latéraux, une paire de châssis médians couplés entre les châssis latéraux, une paire de châssis supplémentaires (620) couplés entre les châssis médians, une paire de supports de moteur (650) et une paire de supports de boîte de vitesses (640), les supports de moteur étant couplés aux châssis médians, les supports de boîte de vitesses étant couplés aux châssis médians, et deux paires de supports d'étrier (630) étant couplées une paire à chaque côté des châssis médians, **caractérisé en ce que** le procédé comporte les étapes consistant à:
insérer une structure élastique (900, 1000) dans chacun des châssis médians,
amener la structure en contact étroit avec une paroi intérieure du châssis médian, et
relier au moins l'une de la paire de supports de moteur, de la paire de supports de boîte de vitesses, et des paires de supports d'étrier à la paire de châssis médians par soudage à l'arc, le contact étroit de la structure élastique avec la paroi intérieure étant suffisant pour réduire ou empêcher la déformation provoquée par le soudage à l'arc.

14. Procédé de fabrication du châssis de bogie pour un véhicule ferroviaire selon la revendication 13, dans lequel la déformation dans le soudage à l'arc est empêchée par la force de friction générée en amenant la structure élastique en contact étroit avec la paroi intérieure du châssis médian et en appuyant la structure contre la paroi intérieure du châssis médian.

15. Procédé de fabrication du châssis de bogie pour un véhicule ferroviaire selon la revendication 13, dans lequel la structure élastique est constituée de fer.

16. Procédé de fabrication du châssis de bogie pour un véhicule ferroviaire selon la revendication 14, dans lequel un mécanisme à vis (920) se déplaçant en ligne droite ou un vérin hydraulique (1020) est utilisé pour presser la structure élastique contre la paroi intérieure du châssis intermédiaire.

17. Procédé de fabrication du châssis de bogie pour un véhicule ferroviaire selon la revendication 16, dans lequel une feuille de céramique (1040) est intercalée entre le mécanisme à vis se déplaçant en ligne droite ou le vérin hydraulique (1020) et des parties de la structure en contact étroit avec le châssis médian (1011, 1012).

18. Procédé de fabrication du châssis de bogie pour un véhicule ferroviaire selon la revendication 13, dans lequel l'air ayant une température inférieure à celle de la structure élastique est soufflé sur la structure pendant le soudage.

19. Procédé de fabrication du châssis de bogie pour un véhicule ferroviaire selon la revendication 18, dans lequel l'air est envoyée à travers l'intérieur du châssis médian.
